# FASCICULE DE BREVET EUROPEEN

(11) **EP 1 366 336 B1**
(45) Date de publication et mention de la délivrance du brevet: **10.08.2005**
(21) Numéro de dépôt: 02718245.0
(22) Date de dépôt: 06.03.2002
(51) Int. Cl.: F41G 7/22, G01S 3/786

(54) **SYSTEME DE VISEE A POINTAGE LASER A TELEMETRE DESIGNATEUR**
LASERRICHTZIELSYSTEM MIT VISIERLASERENTFERNUNGSMESSGERÄT
LASER POINTING SIGHTING SYSTEM WITH DESIGNATOR RANGE FINDER

(30) Priorité: 06.03.2001 FR 0103016
(43) Date de publication de la demande: 03.12.2003
(73) Titulaire: SAGEM SA, 75015 Paris (FR)
(72) Inventeur: DUFRESNE DE VIREL, François, Sagem S.A., F-75015 Paris (FR)
(74) Mandataire: Ahner, Francis
(86) Numéro de dépôt international: PCT/FR2002/000806
(87) Numéro de publication internationale: WO 2002/070981

(56) Documents cités:
- EP-A- 0 770 884
- DE-C- 3 238 896
- FR-A- 2 367 291
- US-A- 4 143 835

## Description

### DOMAINE GENERAL ET ETAT DE LA TECHNIQUE

L'invention concerne des systèmes de visée à pointage laser à télémètre désignateur.

On connaît classiquement des systèmes de visée de type viseur/désignateur qui comprennent, en plus d'une voie d'observation et de visée purement optique, une ou plusieurs voies de visualisation à caméras TV ou IR, ainsi qu'une voie d'émission/réception laser qui est utilisée à la fois pour la fonction télémètre et pour la fonction de désignation.

Généralement, ces systèmes de visée fonctionnent en mode "autonome" : la voie laser du télémètre est utilisée pour illuminer une cible que l'on souhaite désigner à un armement à autoguidage laser qui est tiré par le véhicule qui est équipé du système de visée et qui se guide sur la tache laser formée sur la cible.

On connaît par ailleurs des systèmes de visée dans lesquels la cible est désignée en mode "coopératif" : la cible est alors illuminée par des moyens différents de ceux du véhicule qui porte et tire l'arme à autoguidage. Pour ce mode de fonctionnement, il est alors nécessaire que le système de visée de ce véhicule dispose de moyens lui permettant de détecter la tache d'illumination de la cible et d'asservir sur cette tache sa ligne de visée, de façon que l'arme autoguidée soit tirée dans la direction de la cible désignée et uniquement lorsque celle-ci est effectivement illuminée.

A ce jour, les systèmes de visée qui permettent un fonctionnement en mode coopératif sont relativement complexes. Ils intègrent des moyens d'écartométrie sur tache laser qui sont spécifiquement dédiés à cette fonction et sont juxtaposés aux différentes autres voies du système de visée en étant jumelés très précisément à celles-ci, ce qui complique la conception des systèmes et en augmente le volume, la masse et le coût.

### PRESENTATION DE L'INVENTION

L'invention propose quant à elle un système de visée qui est apte à fonctionner en mode autonome comme en mode coopératif et qui ne présente pas les inconvénients des systèmes de visée qui sont connus à ce jour comme permettant un fonctionnement en mode coopératif.

Le système de visée proposé est un système de visée à pointage laser, du type comportant un télémètre désignateur comprenant des moyens pour l'émission d'un faisceau de désignation et des moyens de réception pour détecter et traiter la réflexion d'une tache lumineuse formée par ledit faisceau sur une cible, caractérisé en ce que lesdits moyens de réception sont aptes, en l'absence d'émission de faisceau de désignation par le télémètre, à détecter la réflexion d'une tache lumineuse formée sur une cible par un dispositif de désignation tiers, le système comportant des moyens aptes, lorsque les moyens de réception du télémètre détectent une telle tache lumineuse, à s'orienter automatiquement par rapport à la direction définie par ladite tâche.

On notera qu'un tel système a l'avantage de permettre un fonctionnement en mode coopératif, sans nécessiter de voies optiques et de détecteurs autres que ceux qui sont généralement présents sur les systèmes de visée.

Un tel système est par ailleurs avantageusement complété par les différentes caractéristiques suivantes prises seules ou selon leurs combinaisons techniquement possibles :
- il comporte des moyens aptes à asservir la direction de visée sur la tache lumineuse détectée par les moyens de réception du télémètre ;
- les moyens d'asservissement comportent des moyens aptes à introduire des perturbations sur la direction d'observation du télémètre et à asservir cette direction sur le maximum de flux de détection reçu par les moyens de réception du télémètre ;
- il comporte une voie de visualisation à caméra, dont la direction d'observation est alignée avec la direction d'observation du télémètre, la voie télémètrique et la voie de visualisation étant en partie commune ;
- le champ d'observation la voie télémètrique est de l'ordre de 1 mrad ;
- les perturbations de la direction de visée correspondent à des perturbations de l'ordre de 1 à 10 pixels sur l'image relevée par la caméra ;
- il comporte des moyens pour asservir la direction de visée par poursuite automatique préalablement à la détection d'une tache lumineuse par le télémètre ;
- il comporte des moyens aptes à vérifier sur la tache lumineuse détectée une longueur d'onde et/ou un code.

L'invention propose par ailleurs également un procédé de désignation d'une cible, caractérisé en ce qu'il met en oeuvre :
- un positionnement de la cible dans le champ de visée d'un système du type précité ;
- une émission d'un faisceau laser par un désignateur tiers sur la cible ;
- une détection de la tache formée sur la cible par ledit faisceau ; et
- un verrouillage de la cible désignée par le système de visée.

Avantageusement, notamment, le positionnement de la cible dans le champ de visée est mis en oeuvre par une poursuite automatique.

L'invention propose par ailleurs également un système de conduite de tir caractérisé en ce qu'il comporte un système de visée du type précité et en ce que le système comporte des moyens aptes à autoriser le déclenchement d'un tir de l'armement lorsque les moyens de réception du télémètre détectent une telle tâche lumineuse.

### PRESENTATION DES FIGURES

D'autres caractéristiques et avantages de l'invention apparaîtront lors de la description ci-après d'un mode préféré de réalisation. Aux dessins annexés :
- la figure 1 est une représentation schématique d'une structure optique d'un système de visée et de conduite de tir conforme à un mode de réalisation possible pour l'invention ;
- la figure 2 est un schéma de principe du mode préféré de réalisation de l'invention ; et,
- la figure 3 est un schéma de principe du fonctionnement du mode coopératif du mode préféré de réalisation de l'invention.

### DESCRIPTION D'UN OU PLUSIEURS MODES DE REALISATION POSSIBLE

### Structure optique

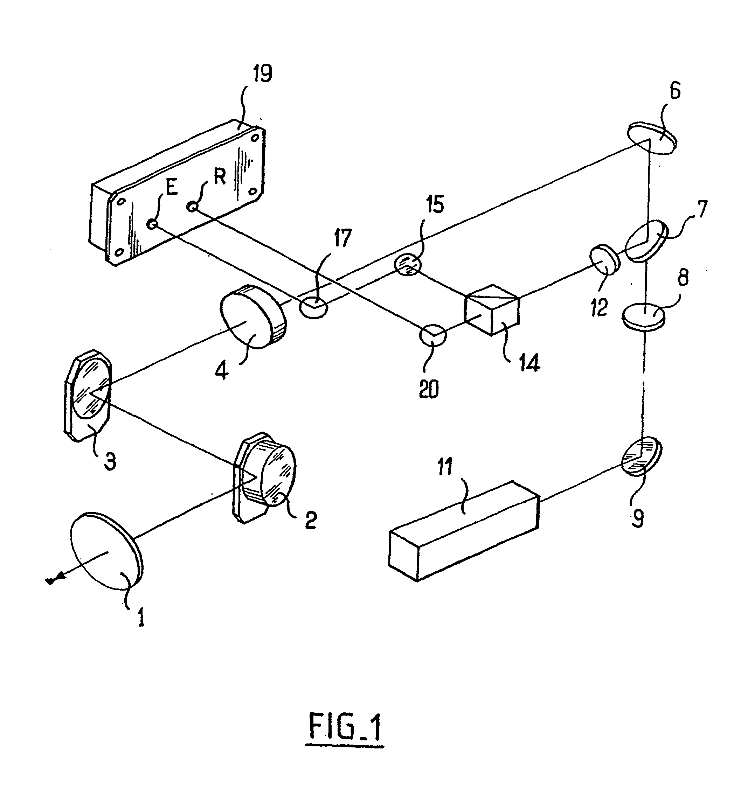

La figure 1 représente l'agencement optique des voies télémètre et TV d'un système ce visée et de conduite de tir, qui a été référencé de façon générale par 100.

Cet agencement comporte une tête optique qui est commune aux voies TV et télémètre et qui comprend un hublot d'entrée 1, des moyens 2 de stabilisation fine, une lentille de tête 4 et des miroirs de renvoi (miroir de tête 3 et miroir 6).

Il comporte également un miroir dichroïque 7 qui distribue les faisceaux lumineux reçus par la tête optique d'une part sur des moyens optiques spécifiques à la voie TV et d'autre part sur des moyens optiques spécifiques à la voie télémètre.

Dans l'exemple illustré sur la figure 1, les moyens spécifiques à la voie TV comportent une lentille 8 et un miroir de renvoi 9 qui renvoient l'image reçue par la lame 7 en entrée d'une caméra 11, qui est par exemple une caméra 11 qui est par exemple une caméra TV, mais qui peut être également une caméra IR.

Les moyens spécifiques_ à la voie télémètre comportent quant à eux un cube de séparation 14 qui renvoie, via une lentille de convergence 12, les faisceaux lumineux reçus de la lame dichroïque 7 sur des moyens de réception R d'un télémètre 19 et qui reçoit de moyens d'émission E de ce télémètre le faisceau de type laser émis par celui-ci, le faisceau d'émission du télémètre traversant ledit cube dichroïque 14 pour être renvoyer par le miroir 7 sur la tête optique du système de visée et de conduite de tir.

Sur la figure 1, les références 15, 17 et 20 désignent des miroirs de renvoi des voies d'émission et réception du télémètre.

Bien entendu, de nombreuses configurations optiques autres que celle représentée sur la figure 1 seraient envisageables.

En particulier, la caméra 11 et le télémètre 19 peuvent ne pas comporter de voie commune. toutefois, des architectures à voie commune sont préférée dans la mesure ou un champ de réception de télémètre laser est particulièrement faible (typiquement 1 mrad) devant le champ, d'une caméra (une vingtaine de mrads).

### Traitement

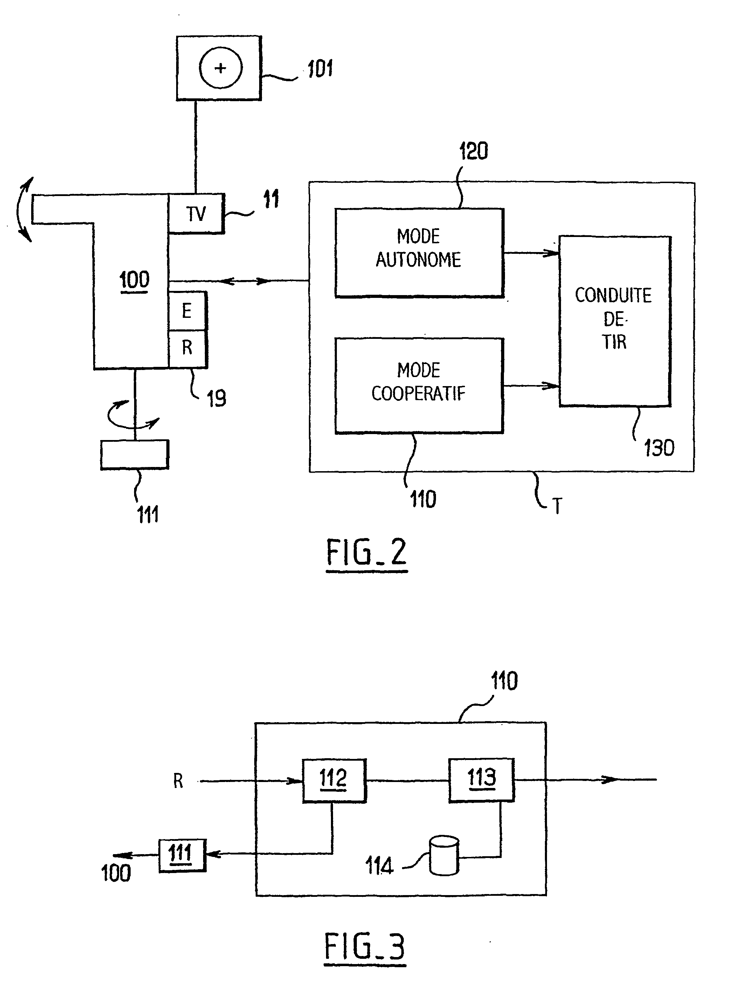

Outre une structure optique du type de celle représentée sur la figure 1, un système conforme à un mode de réalisation possible de l'invention comporte des moyens de traitement T qui sont aptes à gérer le fonctionnement en mode autonome du télémètre 19 (bloc 120 sur le figure 2), ainsi que son fonctionnement en mode coopératif (bloc 110), et qui sont en outre aptes à gérer l'asservissement de la direction de visée et de la direction de tir pour l'un et l'autre des deux modes de fonctionnement (conduite de tir 130).

En mode autonome, la direction sur laquelle l'arme est pointée est asservie par la conduite de tir sur la direction de visée, qui correspond à la direction de désignation du télémètre.

En mode coopératif, le télémètre fonctionne uniquement en récepteur et n'émet aucun faisceau de désignation.

Il pointe dans la direction d'observation et de visée observée par la tête optique du système en créant le cas échéant des petites perturbations autour de cette direction.

Lorsque le télémètre 19 détecte une tache laser dans la direction qu'il observe, les moyens de traitement T vérifient que cette tache laser correspond la longueur d'onde et/ou au code attendu pour une tache de désignation.

Si c'est effectivement le cas, les moyens de traitement T asservissent la direction de visée et de tir sur la direction dans laquelle le télémètre est pointé.

La figure 3 illustre schématiquement des moyens qui permettent aux moyens de traitement T de fonctionner en mode coopératif (bloc 110).

Ces moyens comprennent des moyens 112 qui analysent le flux lumineux reçu par les moyens de détection R du télémètre et commandent des moyens de motorisation 111 qui permettent de déplacer en site et en gisement la direction de visée.

Ces moyens 112 agissent en particulier sur les moyens de motorisation 111 de façon à appliquer de petites perturbations à la direction de visée et à asservir celle-ci sur la position correspondant à un flux de détection maximum.

Par petites perturbations, on entend dans le présent texte des perturbations qui correspondent à des perturbations de l'ordre de 1 à 10 pixels sur l'image relevée par la caméra 11 permettant de faire évoluer le signal détecté de façon à pouvoir s'asservir sur son maximum sans trop perturber l'image présentée.

Les moyens de traitement comportent également des moyens 113 qui analysent la longueur d'onde et/ou les modulations de phase, fréquence ou amplitude portées la tache optique détectée, pour vérifier qu'il s'agit bien d'une tache de désignation qui doit permettre d'autoriser le déclenchement d'un tir de l'armement.

Les moyens 113 mettent à cet effet en oeuvre des comparaisons entre les codes déterminées par démodulation synchrone de la tache optique détectée et des codes de désignation, qui sont par exemple stockés dans des moyens de stockage 114 prévus à cet effet.

Ces codes de désignation peuvent par exemple être des codes OTAN (STANAG 3733) ou tout autre code de désignation utilisé pour illuminer des cibles.

### Exemple d'utilisation

Un système du type de celui qui vient d'être décrit est par exemple utilisé de la façon qui suit.

Dans un premier temps, une cible à désigner est indiquée au système de visée par des moyens conventionnels tels que des coordonnées GPS ou bien des coordonnées de navigation ou bien un descriptif visuel.

Le système de visée est alors asservi par poursuite automatique sur la cible ainsi désignée.

Dans le cas par exemple où la cible est désignée par un descriptif visuel, la poursuite automatique peut être réalisée par des moyens classiques d'écartométrie ou de traitement d'image sur la voie TV ou IR qui correspond à la caméra 11, l'image relevée par ladite caméra s'affichant sur un écran sur lequel apparaît également un réticule de visée (écran 101 sur la figure 2).

Lorsque le système de visée est asservi sur la zone qui lui a été indiquée, un désignateur tiers (fantassin à proximité de la cible par exemple) illumine la cible à l'aide d'un faisceau de désignation de type laser, qui est par exemple pulsé selon un code de désignation défini.

La tache formée sur cette cible par le faisceau de désignation peut alors être détectée par le télémètre 19.

On notera que cette détection ne nécessite pas au niveau du télémètre 19 de moyens optiques ou de moyens d'amplification autres que ceux utilisés pour le mode autonome : la détection, en mode coopératif, de la tache optique formée par le désignateur tiers se fait dans des conditions équivalentes au cas d'une désignation en mode autonome.

Le code de désignation utilisé pour illuminer la cible (code OTAN, STANAG 3733, ou tout autre) étant connu du télémètre, les moyens de traitement T mettent en oeuvre une détection synchrone pour détecter l'illumination recherchée.

La petitesse du champ de réception laser, (typiquement de 1 mrad) permet d'assurer le maintien de la ligne de visée du viseur/désignateur dans la direction de la cible désignée avec une précision suffisante pour l'engagement et le tir devant atteindre cette cible.

Pour compléter le verrouillage de position qu'il est ainsi possible de réaliser, le système peut également commander les moyens de motorisation 111 pour introduire de légères perturbations sur la direction de visée et asservir celle-ci sur le maximum de flux en détection synchrone.

Une fois le système de visée et de conduite de tir verrouillé sur la tache de désignation, l'opérateur peut alors engager et tirer l'armement qui doit se guider sur cette tache.

## Revendications

1. Système de visée à pointage laser, du type comportant un télémètre désignateur (19) comprenant des moyens (E) pour l'émission d'un faisceau de désignation et des moyens de réception (R) pour détecter et traiter la réflexion d'une tache lumineuse formée par ledit faisceau sur une cible, **caractérisé en ce que** lesdits moyens de réception (R) sont aptes, en l'absence d'émission de faisceau de désignation par le télémètre, à détecter la réflexion d'une tache lumineuse formée sur une cible par un dispositif de désignation tiers, le système comportant des moyens aptes, lorsque les moyens de réception du télémètre détectent une telle tache lumineuse, à s'orienter automatiquement par rapport à la direction définie par ladite tâche.

2. Système selon la revendication 1, **caractérisé** à ce qu'il comporte des moyens (112) aptes à asservir la direction de visée sur la tache lumineuse détectée par les moyens de réception du télémètre.

3. Système selon la revendication 2, **caractérisé en ce que** les moyens d'asservissement (112) comportent des moyens aptes à introduire des perturbations sur la direction d'observation du télémètre et à asservir cette direction sur le maximum de flux de détection reçu par les moyens de réception du télémètre (19).

4. Système selon l'une des revendications précédentes, **caractérisé en ce qu'**il comporte une voie de visualisation à caméra (11), dont la direction d'observation est alignée avec la direction d'observation du télémètre, la voie télémètrique et la voie de visualisation étant en partie commune.

5. Système selon les revendications 3 et 4, **caractérisé en ce que** les perturbations de la direction de visée correspondent à des perturbations de l'ordre de 1 à 10 pixels sur l'image relevée par la caméra (11).

6. Système selon l'une des revendications précédentes, **caractérisé en ce que** le champ d'observation de la voie télémètrique est de l'ordre de 1 mrad.

7. Système selon l'une des revendications précédentes, **caractérisé en ce qu'**il comporte des moyens pour asservir la direction de visée par poursuite automatique préalablement à la détection d'une tache lumineuse par le télémètre.

8. Système selon l'une des revendications précédentes, **caractérisé en ce qu'**il comporte des moyens aptes à vérifier sur la tache lumineuse détectée une longueur d'onde et/ou un code.

9. Procédé de désignation d'une cible, **caractérisé en ce qu'**il met en oeuvre :
- un positionnement de la cible dans le champ de visée d'un système selon l'une des revendications précédentes ;
- une émission d'un faisceau de désignation par un désignateur tiers sur la cible ;
- une détection de la tache formée sur la cible par ledit faisceau ; et
- un verrouillage de la cible désignée par le système de visée.

10. Procédé selon la revendication 9, **caractérisé en ce que** le positionnement de la cible dans le champ de visée est mis en oeuvre par une poursuite automatique.

11. Système de conduite de tir **caractérisé en ce qu'**il comporte un système de visée selon l'une des revendications 1 à 8 et **en ce que** le système comporte des moyens aptes à autoriser le déclenchement d'un tir de l'armement lorsque les moyens de réception du télémètre détectent une telle tâche lumineuse.

## Claims

1. Laser sighting system, of the type comprising a designator/rangefinder (19) comprising means (E) for emitting a designating beam and receive means (R) for detecting and processing the reflection of a light spot formed by said beam on a target, **characterized in that** said receive means (R) are capable, in the absence of a designating beam being emitted by the rangefinder, of detecting the reflection of a light spot formed on a target by a third-party designating device, the system including means capable, when the receive means of the rangefinder detect such a light spot, of being automatically oriented in relation to the direction defined by said spot.

2. System according to Claim 1, **characterized in that** it includes means (112) capable of slaving the line of sight to the light spot detected by the receive means of the rangefinder.

3. System according to Claim 2, **characterized in that** the slaving means (112) include means capable of introducing perturbations in the viewing direction of the rangefinder and of slaving this direction to the maximum detection flux received by the receive means of the rangefinder (19).

4. System according to one of the preceding claims, **characterized in that** it includes a camera display channel (11), the viewing direction of which is aligned with the viewing direction of the rangefinder, the rangefinder channel and the display channel being partly common.

5. System according to Claims 3 and 4, **characterized in that** the perturbations in the line of sight correspond to perturbations of the order of 1 to 10 pixels on the image recorded by the camera (11).

6. System according to one of the preceding claims, **characterized in that** the field of view of the rangefinder channel is of the order of 1 mrad.

7. System according to one of the preceding claims, **characterized in that** it includes means for slaving the line of sight by automatic tracking prior to a light spot being detected by the rangefinder.

8. System according to one of the preceding claims, **characterized in that** it includes means capable of verifying a wavelength and/or a code on the light spot detected.

9. Method of designating a target, **characterized in that** it involves:
- positioning of the target in the field of view of a system according to one of the preceding claims;
- emission of a designating beam by a third-party designator onto the target;
- detection of the spot formed on the target by said beam; and
- locking of the target designated by the sighting system.

10. Method according to Claim 9, **characterized in that** the target is positioned in the field of view by automatic tracking.

11. Fire control system, **characterized in that** it includes a sighting system according to one of Claims 1 to 8 and **in that** the system includes means capable of authorizing the firing of the weapon when the receive means of the rangefinder detect such a light spot.

## Patentansprüche

1. Laserrichtzielsystem vom Typ, der einen Kennzeichnungsentfernungsmesser (19) umfasst, der folgendes umfasst: Mittel (E) zum Aussenden eines Kennzeichnungsstrahls und Empfangsmittel (R) zur Detektion und zum Verarbeiten der Reflexion eines leuchtenden Flecks, der vom Strahl auf einem Ziel gebildet wird, **dadurch gekennzeichnet, dass** die Empfangsmittel (R) dafür eingerichtet sind, bei fehlender Aussendung eines Kennzeichnungsstrahls durch den Entfernungsmesser, die Reflexion eines leuchtenden Flecks zu detektieren, der von einer dritten Kennzeichnungsvorrichtung auf einem Ziel gebildet wird, wobei das System Mittel umfasst, die dafür eingerichtet sind, sich automatisch in Bezug auf die durch diesen Fleck definierte Richtung auszurichten, wenn die Empfangsmittel des Entfernungsmessers einen solchen leuchtenden Fleck detektieren.

2. System nach Anspruch 1, **dadurch gekennzeichnet, dass** es Mittel (112) umfasst, die dafür eingerichtet sind, die Zielrichtung auf den von den Empfangsmitteln des Entfernungsmessers detektierten leuchtenden Fleck zu regeln.

3. System nach Anspruch 2, **dadurch gekennzeichnet, dass** die Regelungsmittel (112) Mittel umfassen, die dafür eingerichtet sind, Störungen der Beobachtungsrichtung des Entfernungsmessers zu erzeugen und diese Richtung auf das Maximum des Detektionsflusses zu regeln, der von den Empfangsmitteln des Entfernungsmessers (19) empfangen wird.

4. System nach einem der vorhergehenden Ansprüche, **dadurch gekennzeichnet, dass** es einen Kamera-Visualisierungskanal (11) umfasst, dessen Beobachtungsrichtung mit der Beobachtungsrichtung des Entfernungsmessers ausgerichtet ist, wobei der Entfernungsmesskanal und der Visualisierungskanal teilweise gemeinsam sind.

5. System nach den Ansprüchen 3 und 4, **dadurch gekennzeichnet, dass** die Störungen der Zielrichtung Störungen in der Größenordnung von 1 bis 10 Pixel in dem von der Kamera (11) erfassten Bild entsprechen.

6. System nach einem der vorhergehenden Ansprüche, **dadurch gekennzeichnet, dass** das Beobachtungsfeld des Entfernungsmesskanals in der Größenordnung von 1 mrad ist.

7. System nach einem der vorhergehenden Ansprüche, **dadurch gekennzeichnet, dass** es Mittel umfasst, um die Zielrichtung durch automatische Verfolgung zu regeln bevor ein leuchtender Fleck vom Entfernungsmesser detektiert wird.

8. System nach einem der vorhergehenden Ansprüche, **dadurch gekennzeichnet, dass** es Mittel umfasst, die dafür eingerichtet sind, für den detektierten leuchtenden Fleck eine Wellenlänge und/oder einen Code zu verifizieren.

9. Kennzeichnungsverfahren für ein Ziel, **dadurch gekennzeichnet, dass** es folgendes ausführt:
- ein Positionieren des Ziels im Zielfeld eines Systems gemäß einem der vorhergehenden Ansprüche;
- ein Aussenden eines Kennzeichnungsstrahls durch ein drittes Kennzeichnungsgerät auf das Ziel;
- eine Detektion des Flecks, der vom Strahl auf dem Ziel gebildet wird; und
- ein Festhalten des **gekennzeichnet**en Ziels durch das Zielsystem.

10. Verfahren nach Anspruch 9, **dadurch gekennzeichnet, dass** das Positionieren des Ziels im Zielfeld durch eine automatische Verfolgung ausgeführt wird.

11. Feuerleitsystem, **dadurch gekennzeichnet, dass** es ein Zielsystem gemäß einem der Ansprüche 1 bis 8 umfasst und **dadurch**, dass das System Mittel umfasst, die dafür eingerichtet sind, das Auslösen eines Schusses der Bewaffnung zu gestatten, wenn die Empfangsmittel des Entfernungsmessers einen solchen leuchtenden Fleck detektieren.
